# EUROPEAN PATENT SPECIFICATION

(11) **EP 3 561 503 B1**
(45) Date of publication and mention of the grant of the patent: **22.04.2020**
(21) Application number: 18169735.0
(22) Date of filing: 27.04.2018
(51) Int. Cl.: G01N 29/04, G01N 29/06, G01N 29/11, G01N 29/44, G01H 1/16, G06T 7/00, G06T 7/73

(54) **DETECTION OF PORTIONS OF INTEREST IN IMAGE OR MATRIX DATA**
DETEKTION VON INTERESSIERENDEN BEREICHEN IN BILD- ODER MATRIXDATEN
DÉTECTION DE PARTIES D'INTÉRÊT DANS DES DONNÉES D'IMAGE OU DE MATRICE

(43) Date of publication of application: 30.10.2019
(73) Proprietor: FUJITSU LIMITED, Kanagawa 211-8588 (JP)
(72) Inventor: TOWNSEND, Joseph, High Wycombe, Buckinghamshire HP15 7AX (GB); GEORGESCU, Serban, London, W13 8NH (GB)
(74) Representative: Haseltine Lake Kempner LLP

(56) References cited:
- WO-A1-2013/044350
- US-A1- 2009 238 432
- US-A1- 2009 279 772

## Description

Embodiments of the present invention relate to the detection of portions of interest in image or matrix data.

Detection of a portion of interest in an image is advantageous in many different technical fields. One such field is ultrasonic non-destructive testing (NDT) of items.

Ultrasonic NDT is a non-invasive technique that is used for determining the integrity of materials, such as fiberglass used in manufacturing, or structures, and enables the detection of internal defects in the test object. In this technique, one or more ultrasound probes emit sound waves that propagate inside the object and receive the echoes resulting from interactions with the internal structures. The distance of the reflector material may be accurately estimated based on the speed of the sound wave. For example, WO2013/044350A1 discloses methods and devices for performing ultrasound inspection of objects using full matrix data capture techniques.

Ultrasonic scans are stored as numerical values in a matrix which is then translated into an image for visual inspection, for example according to a heat map in which blue represents low values and red represent high values. Signals caused by reflections due to flaws, such as discontinuities, wrinkles, trapped objects, air pockets, etc., may be identified in the scans. This technique is widely used in industry as part of manufacturing quality control processes. Currently the detection is a manual process, involving a thorough visual inspection of each section of the scan. Depending on the dimensions of the test object, a trained operator may spend several hours looking through visualisations of the scans in order to identify regions of the structure that may have defects and require physical inspection. The operator uses visual cues, such as structure curvatures or discontinuities, to flag potential defects. This is done through interactive visualisation of the raw scan data, which enables adjustment of saturation thresholds, zooming, etc. Although the operators are highly-trained, the inspection is not guaranteed to have full coverage of all defects due to noise in the raw data, resulting from the propagation of echoes, and/or issues with the visualisation.

Such NDT scans detect multiple boundary or 'wall' structures of an item being tested: the front wall, the back wall, and an 'echo' of the back wall. Identifying the front and back wall is important because the space between these walls is where the search for defects must take place; any other space in the image is noise and is ignored.

It is desirable to devise techniques whereby detection of portions of interest in the image data is automatic. The front wall is simple to identify because it will always be presented at the top of the image of a scan, but automatically identifying the back wall is more difficult, as the locations of the back wall and its echo may vary and data from either wall or the echo may be missing.

Certain patterns that are indicative of manufacturing defects, such as wrinkles, trapped objects and so on, may be detected using automated pattern detection techniques known in the art (e.g., Machine Learning techniques), however the presence of the noise (i.e. echoes) found under the back wall makes such automated pattern detection more challenging, as such automated methods may be confused by the patterns found in the noise.

Automatically detecting portions of interest may also be problematic in other technical areas. For example, identifying road lane markings in an image automatically may be difficult if parts of a lane marking are obscured or missing.

One previously-proposed method for automatically detecting the back wall, while effective, is built on some assumptions, in particular that the number of layered structures in the image is constant across all images, and that the target layer(s) of interest always take a given position in the positional ordering of the overall set of structures. These assumptions work for the majority of cases, but not all, and even a small number of incorrect detections may be catastrophic and/or expensive depending on the field in which the technology is applied.

US2009/0279772A1 discloses an anomaly detection method which includes acquiring image data corresponding to NDT of a scanned object which comprises at least one inspection test image of the scanned object and multiple reference images for the scanned object. The anomaly detection method further includes generating an anomaly detection model based on a statistical analysis of one or more image features in the reference images for the scanned object and identifying one or more defects in the inspection test image, based on the anomaly detection model.

A similar method is disclosed in US2009/238432A1, which includes identifying one or more regions of interest in a reference image and aligning an inspection test image with the regions of interest identified in the reference image, to obtain a residual image. The method further includes identifying one or more defects in the inspection test image based upon the residual image and one or more defect probability values computed for one or more pixels in the residual image.

It is desirable to provide an improved method of automatically locating portions of interest in image data.

An embodiment according to a first aspect provides a computer-implemented method of locating a portion of interest in image or matrix data to be analyzed, which data are derived from an item under consideration, the method comprising: obtaining approximate coordinates of a feature in training data, extending in an xy plane, which is deemed to correspond to the portion of interest, which training data have been acquired by a device which also acquired the data to be analyzed and relate to an item similar to the item under consideration, wherein the training data comprises at least two separate pieces of data and obtaining the approximate coordinates includes calculating a mean y coordinate for each x coordinate of the said feature in each piece of training data and averaging the mean y coordinates for each x coordinate; specifying a bounding region which extends around an area defined by the approximate coordinates of the feature; identifying in the data to be analyzed at least one candidate part for a component of the portion of interest; removing from the data to be analyzed any candidate parts having coordinates which fall outside the bounding region to obtain masked data; and deriving an estimate for the location of the portion of interest in the data to be analyzed from the masked data by either: (i) determining the mean y coordinate for each x coordinate of the masked data, fitting a polynomial curve of best fit to the mean coordinates, and identifying the candidate parts which fall within a region enclosing the polynomial curve of best fit as structures forming the portion of interest; or (ii) fitting a polynomial curve of best fit to the masked data, and identifying the candidate parts which fall within a region enclosing the polynomial curve of best fit as structures forming the portion of interest.

An embodiment according to a second aspect provides a computer program which, when run on a computer, causes a computer to carry out a method embodying the first aspect.

An embodiment according to a third aspect provides data processing apparatus to locate a portion of interest in image or matrix data to be analyzed, which data relates to an item under consideration, the apparatus comprising: a coordinate receiver to receive approximate coordinates of a feature in the training data, extending in an xy plane, which is deemed to correspond to the portion of interest, which training data have been acquired by a device which also acquired the data to be analyzed and relate to an item similar to the item under consideration, wherein the training data comprises at least two separate pieces of data and obtaining the approximate coordinates includes calculating a mean y coordinate for each x coordinate of the said feature in each piece of training data and averaging the mean y coordinates for each x coordinate; a bounding region specifier to specify a bounding region which extends around an area defined by the approximate coordinates of the feature; a candidate part identifier to identify in the data to be analyzed at least one candidate part for a component of the portion of interest; a mask applier to obtain masked data by removing from the data to be analyzed any candidate parts having coordinates which fall outside the bounding region; and an estimator to derive from the masked data an estimate for the location of the portion of interest in the data to be analyzed by either: (i) determining the mean y coordinate for each x coordinate of the masked data, fitting a polynomial curve of best fit to the mean coordinates, and identifying the candidate parts which fall within a region enclosing the polynomial curve of best fit as structures forming the portion of interest; or (ii) fitting a polynomial curve of best fit to the masked data, and identifying the candidate parts which fall within a region enclosing the polynomial curve of best fit as structures forming the portion of interest.

Embodiments may allow an automated search for defects or other artefacts or structures in an item under consideration to be narrowed down, by employing approximate coordinates of a portion of interest in image or matrix data, regions some distance above and below which coordinates the target artefacts may be expected to be found by the otherwise automated search process. Thus, an embodiment may provide a mechanism that requires minimal human guidance yet is nonetheless sufficient to enable an otherwise automated process to bypass potentially incorrect assumptions.

Obtaining approximate coordinates may comprise receiving coordinates of a feature in the training data which have been provided by a human operator. Alternatively, it may be possible for the approximate coordinates to be provided by an automated process. In particular, embodiments may provide a means by which an human (or machine) operator may provide an indication of approximate coordinates of a region within which a portion of interest in image or matrix data, for example the back wall of an ultrasound scan, may realistically be expected to be found. These approximate coordinates then form the basis for a starting point from which automated detection of a portion of interest may begin. In this way, the automated search is not heavily constrained by naïve assumptions about the location of the portion of interest and other parts of the image, whilst at the same time the need for a user to provide a precise indication of the location of the portion of interest is avoided. As a result, detection accuracy may be improved at the cost of only a small amount of human intervention.

Identifying at least one candidate part may comprise applying a segmentation process to the data to be analyzed.

Deriving an estimate from the masked data may comprise: determining the mean coordinates of the masked data; and identifying the candidate parts which fall within a region enclosing the mean coordinates of the masked data as structures forming the portion of interest.

The estimate of the location of portion of interest is autonomously improved by fitting a polynomial curve to segmented structures which lie within the approximated coordinates. The two approaches are able to support one another: initial approximation of the coordinates of the portion of interest using training data reduces the search space for the curve-of-best fit, and the curve-of best fit is able to fine-tune training approximations made by an operator so that less precision and effort is required by that operator. An additional benefit of this polynomial function- based estimation, as opposed for example to a bitmap-based estimation, is that it may be easily scaled to larger (or smaller) versions of the same image.

In particular, deriving an estimate from the masked data may comprise: determining the mean coordinates of the masked data; fitting a polynomial curve of best fit to the mean coordinates; and identifying the candidate parts which fall within a region enclosing the polynomial curve of best fit as structures forming the portion of interest.

Alternatively, deriving an estimate from the masked data may comprise: fitting a polynomial curve of best fit to the masked data; and identifying the candidate parts which fall within a region enclosing the polynomial curve of best fit as structures forming the portion of interest.

The data to be analyzed may be derived from an item under consideration and the portion of interest in the data may be one of a layer, a wall or a boundary in the item. The data may be derived from ultrasound scan data of the item under consideration. The item under consideration may be at least one of: a manufactured item; and an item used in manufacture. Embodiments may be used to detect a defect in the item under consideration for the purpose of determining at least one of: the structural integrity of material forming at least part of the item; and flaws in material forming at least part of the item.

Reference will now be made, by way of example, to the accompanying drawings, in which:
Figure 1 is a flowchart of a method according to an embodiment;
Figure 2 is a diagram of apparatus according to an embodiment;
Figures 3a to 3c are diagrams for use in explaining how approximate coordinates for a portion of interest may be obtained from training data;
Figures 4a to 4c are diagrams for use in explaining how a bounding region around a mean of the approximate coordinates may be obtained;
Figures 5a and 5b are diagrams for use in explaining how candidate parts of a portion of interest may be identified;
Figures 6a to 6c are diagrams for use in explaining how candidate parts outside the bounding region may be removed to obtain masked data;
Figures 7a and 7b are diagrams for use in explaining fitting of a polynomial curve of best fit to the masked data;
Figure 8 is a diagram illustrating the estimated location of a portion of interest;
Figure 9 is a diagram illustrating a missing part of the portion of interest;
Figure 10 is a diagram for explaining the use of a "moving window" approach in cleaning up the data to be analysed;
Figure 11 is a flowchart of a patch cropping process;
Figure 12 is a diagram for use in explaining an application of an embodiment to analysis of a pipe structure;
Figures 13a and 13b are diagrams depicting an image of ultrasound scan data obtained from scanning the structure of Figure 12;
Figure 14 is a diagram for use in explaining the application of Figure 12; and
Figure 15 is a block diagram of a computing device embodying the present invention.

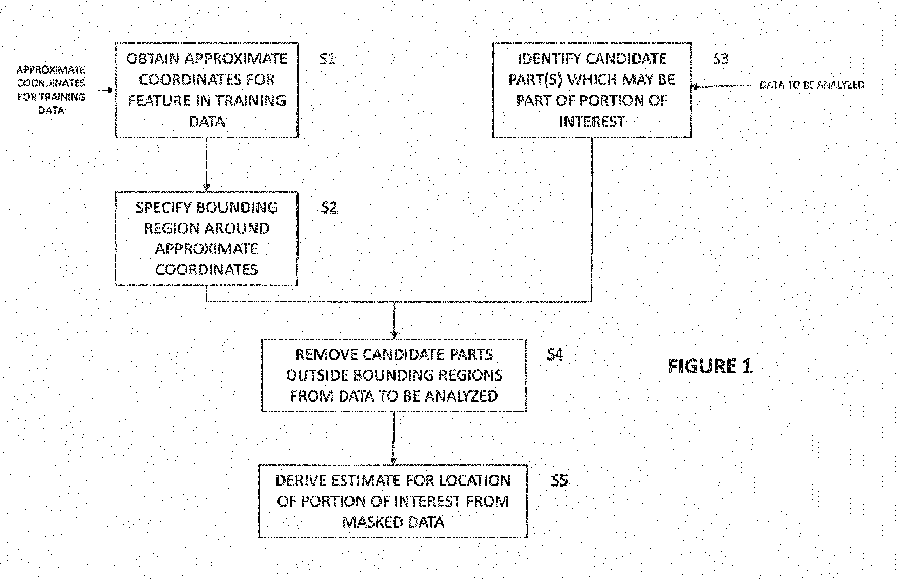

Figure 1 is a flowchart of a computer-implemented method of locating a portion of interest in image or matrix data to be analyzed, which relates to an item under consideration. In step S1, approximate coordinates of a feature in the training data which is likely to correspond to the portion of interest are obtained. The training data were acquired by a device which also acquired the data to be analyzed and relate to an item similar to the item under consideration. Then, in step S2, a bounding region which extends around an area defined by the approximate coordinates of the feature is specified. Before or after these steps, or (as shown) in parallel with them, at step S3 at least one candidate part which may be a component of the portion of interest is identified in the data to be analyzed. In step S4, any candidate parts having coordinates which fall outside the bounding region are removed from the data to be analyzed to obtain masked data. In step S5, an estimate for the location of the portion of interest in the data to be analyzed is estimated from the masked data.

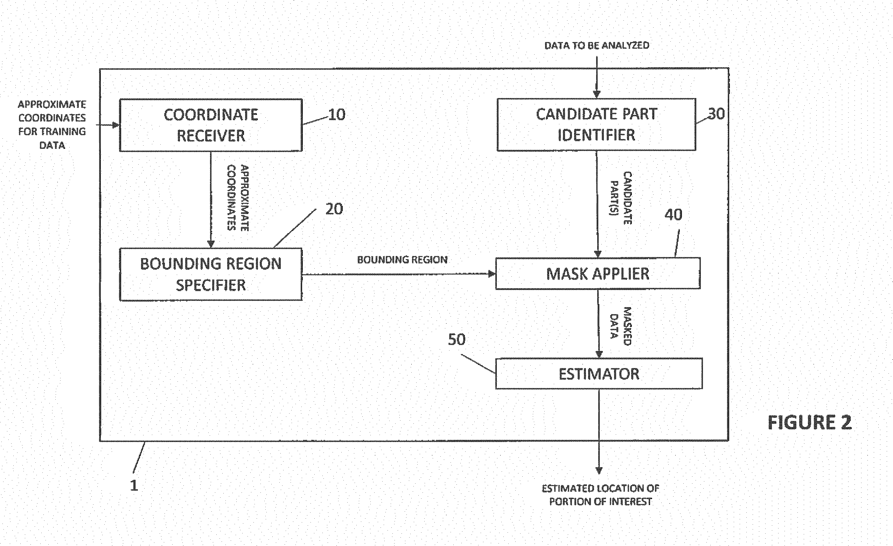

Figure 2 is a block diagram of data processing apparatus 1 for locating a portion of interest in image or matrix data to be analysed in accordance with the method described above with reference to Figure 1. Data processing apparatus 1 comprises a coordinate receiver 10, a bounding region specifier 20, a candidate specifier 30, a mask applier 40 and an estimator 50. Coordinate receiver 10 is configured to receive approximate coordinates of a feature in the training data which is likely to correspond to the portion of interest. Bounding region specifier 20 is configured to specify a bounding region which extends around an area defined by the approximate coordinates of the feature. Candidate part identifier 30 is configured to identify in the data to be analyzed at least one candidate part which may be a component of the portion of interest. Mask applier 40 is configured to obtain masked data by removing from the data to be analyzed any candidate parts having coordinates which fall outside the bounding region. Estimator 50 is configured to derive from the masked data an estimate for the location of the portion of interest in the data to be analyzed.

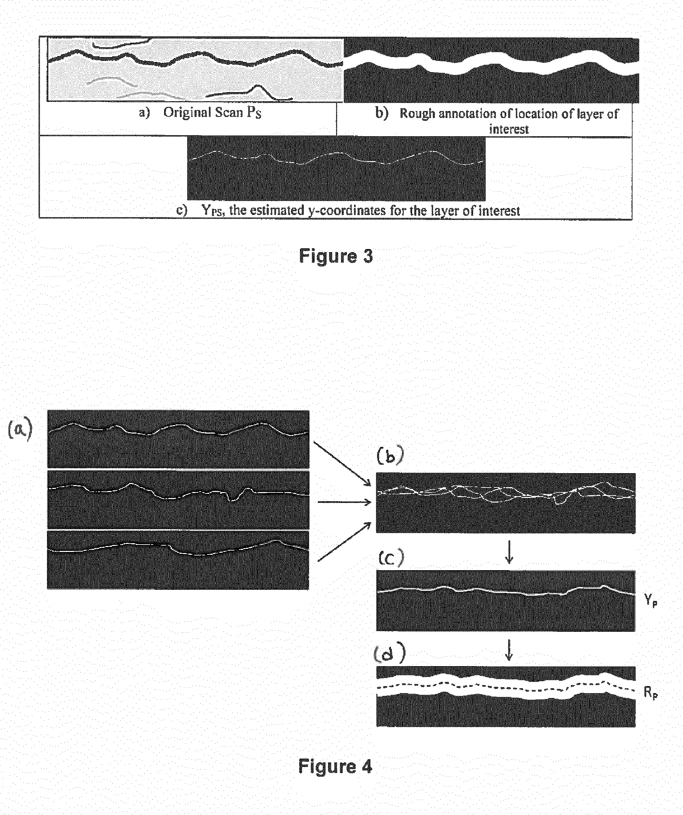

As indicated above, as a starting point for producing a more precise estimation of the mean location for a specific piece of data, embodiments initially use approximate coordinates for the location of the portion of interest. The approximate coordinates are a "supervised estimate" obtained using suitable training data, for example in the manner described below with reference to Figures 3a to 3c and 4a to 4d. By way of example only, the explanation below is given in respect of ultrasound scan data obtained using a given probe P.

A region in which a portion of interest is most likely to be found in an item under consideration is determined for a given probe P on any scan of the item made by that probe, on the basis of suitable training data comprising at least one training scan made by that probe of another item of a similar (most desirably very similar or the same) type. Ideally, but not essentially, a set of training scans made by the same probe of at least two individual items are used, where the two individual items are both of the same or very similar kind or class as the item under consideration. For example, where the item under consideration is a turbine blade, a suitable set of training scans might be scans of two or more turbine blades of the same shape and size as each other and as a turbine blade under consideration obtained using the same probe as the data being analyzed.

Figures 3a to 3c are diagrams for use in explaining how the approximate location of a portion of interest for a given scan P_{S} of an article is obtained in the case that the portion of interest is a layer. Given a suitable training scan P_{S} from a given probe P (Figure 3a), a human operator may visually examine the scan Pₛ and manually indicate the approximate location of the layer of interest on the scan. As shown in Figure 3b, this location may for example be shown as one color (e.g. white) against a backdrop of another (e.g. black). The location need not be precise. After the location has been indicated, manually or automatically, the mean y coordinate is calculated for each x coordinate (Figure 3c) to obtain approximate coordinates for the layer of interest. The above-described process corresponds to step S1 of Figure 1 and the operations of coordinate receiver 10 of Figure 2. Where the training data contains two or more training scans Pₛ, these steps are carried out for each training scan Pₛ to obtain multiple approximations.

In the case of multiple approximations (three approximations, in the example shown in Figure 4a), the approximate coordinates are then combined (Figure 4b) to produce an estimated region for discovering the layer of interest in the scan of the item under consideration. As shown in Figure 4c, the mean y for each x is then averaged over all training scans P_{S} to produce Y_{P}, the set of estimates of the γ-coordinates of the layer of interest corresponding to each x. In other words, Y_{P} is the supervised estimate of the layer of interest's location for probe P on the scan of the article under consideration. As shown in Figure 4d, the supervised estimate is then used to produce a "supervised mask" by specifying a bounding region R_{P} extending in the + and - y directions around the supervised estimate. The bounds of this region are specified as some distance d above and below each y value in Y_{P}. Distance d may be set either manually, through a trial and error process, by the operator when working with the training data, or automatically, for example using a search algorithm. The criteria used in the process to set d may be the value of d that yields a result closest to a desired result in accordance with the performance indicator being used (for example, most accurate result, True Positive rate, etc.). The manual or automated process for searching possible values may be stopped, for example, when N values of d have been explored, or when the change in the best result found is less than X% for at least M iterations, or when any other suitable stopping condition is reached. Distance d would normally, but not necessarily, be equal above and below each y in Y_{P}. In summary, R_{P} forms the supervised mask, an estimated region within which the layer of interest may be thought to lie for any scan made by probe P. The above-described process corresponds to step S2 of Figure 1 and the operations of bounding region specifier 20 of Figure 2.

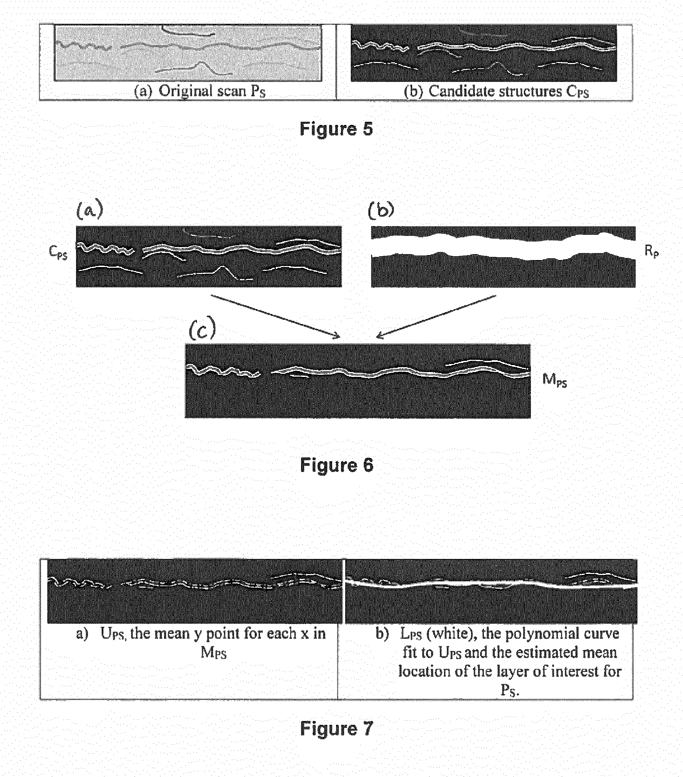

Figures 5a and 5b are diagrams for use in explaining how candidate components of the layer of interest may be identified using a segmentation process. Independently of, but in parallel with obtaining the supervised estimate and mask (or alternatively before or after those steps), given a specific P_{S} scan to be analyzed for discovery of a layer of interest, for example as shown in Figure 5a, candidate structures C_{PS} that may or may not form part of the layer of interest, for example as shown in Figure 5b, are identified. The above-described process corresponds to step S3 of Figure 1 and the operations of candidate part identifier 30 of Figure 2.

For example, candidate structures may be identified using a segmentation process. One of a number of different previously-proposed segmentation processes may be used. For example, a standard thresholding process could be used, e.g. one in which regions in which RGB color values adhere to fixed bounds are identified as candidate structures. Another suitable segmentation process is one known as Back Projection. In Back Projection, a histogram of a sample of a target region is used as a basis by which to filter unwanted regions, by removing pixels which are not (or are but only weakly) represented by that histogram. This approach is applied to a scan, based on a sample of the layer of interest. However this does not guarantee that only the layer of interest remains, as other structures resembling it (or part of it) may remain in the scan.

Figures 6a to 6c are diagrams for use in explaining how the supervised mask R_{P} for probe P (Figure 6b), derived as described earlier with reference to Figure 4d, may be applied to the candidate structures C_{PS} (Figure 6a), identified as described earlier with reference to Figure 5b, in order to narrow down further the candidate structures for the layer of interest in scan P_{S}. The supervised mask R_{P} is applied over the candidate structures C_{PS} of scan P_{S} so that only elements of C_{PS} within the region R_{P} remain. This forms masked data M_{PS} (Figure 6c). The above-described process corresponds to step S4 of Figure 1 and the operations of mask applier 40 of Figure 2.

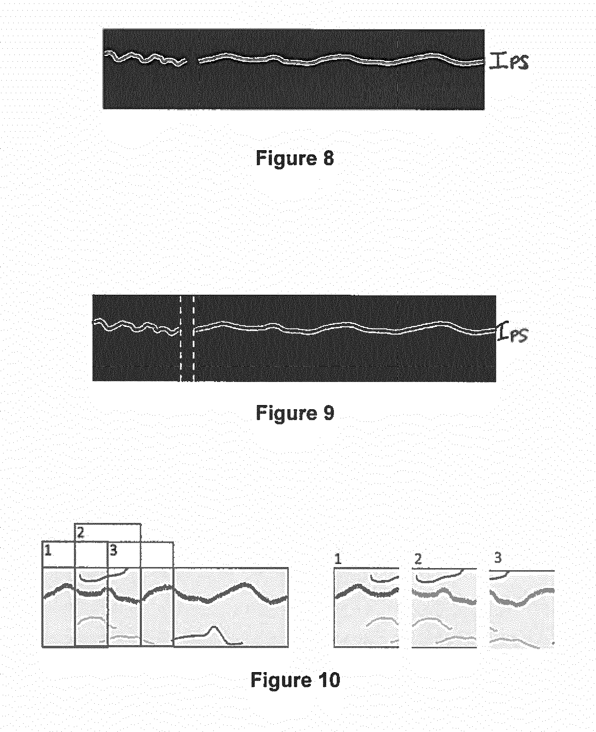

An estimate for the location of the layer of interest in the data to be analyzed may be derived from the masked data M_{PS}. This corresponds to step S5 of Figure 1 and the operations of estimator 50 of Figure 2. Examples of how this may be done will be explained with reference to Figures 7a, 7b and 8.

In one example, for each x value in masked data M_{PS} (Figure 6c), the mean y location is taken to produce a mean coordinates value U_{PS} (Figure 7a). Candidate parts which fall within a region enclosing the mean coordinates U_{PS} of the masked data (or within some specified region above and/or below it, determined for example using similar techniques to those used to find distance d as discussed with reference to Figure 4d) are identified as structures forming the portion of interest.

According to an embodiment, after obtaining mean coordinates value U_{PS}, a polynomial curve of best fit is fit over all points of mean coordinates value U_{PS} to obtain the mean location L_{PS} ("segmented mean") of the layer of interest for scan P_{S}, as shown in Figure 7b. Candidate parts which fall within a region enclosing the segmented mean L_{PS} (or within some specified region above and/or below it) are then identified as structures forming the portion (layer) of interest I_{PS}, as shown in Figure 8.

According to another embodiment, a polynomial curve of best fit is fit over all points of masked data M_{PS} without obtaining mean coordinates value U_{PS} Candidate parts which fall within a region enclosing the curve fitted to the masked data M_{PS} (or within some specified region above and/or below that curve, determined for example using similar techniques to those used to find distance d as discussed with reference to Figure 4d) are then identified as structures forming the portion of interest.

If the goal is to identify missing regions within a layer of interest, these may be taken to be x ranges within which no part of the estimated layer of interest I_{PS} is present, as shown by the gap indicated by vertical dotted lines in Figure 9.

It may be desirable to clean up the data to be analyzed, for example to assist in defect pattern detection. Techniques previously employed to remove the noise under the back wall, in order to make pattern detection more accurate, either rely on the accurate detection of the back wall or on a fixed depth threshold below which the data is ignored. In either case, lack of accuracy in detecting the back wall, and/or the lack of flexibility of a simple depth threshold, directly translates into a drop of accuracy in detecting the patterns of defects.

A widely used method for pattern detection is the "moving window" approach, where the given scan is sliced into a set of smaller patches using a window of a given size. An example of this operation as applied to the layer of interest I_{PS} is shown in Figure 10, where successive windows partially overlap one another (lefthand side) to produce patches 1, 2 and 3 (righthand side).

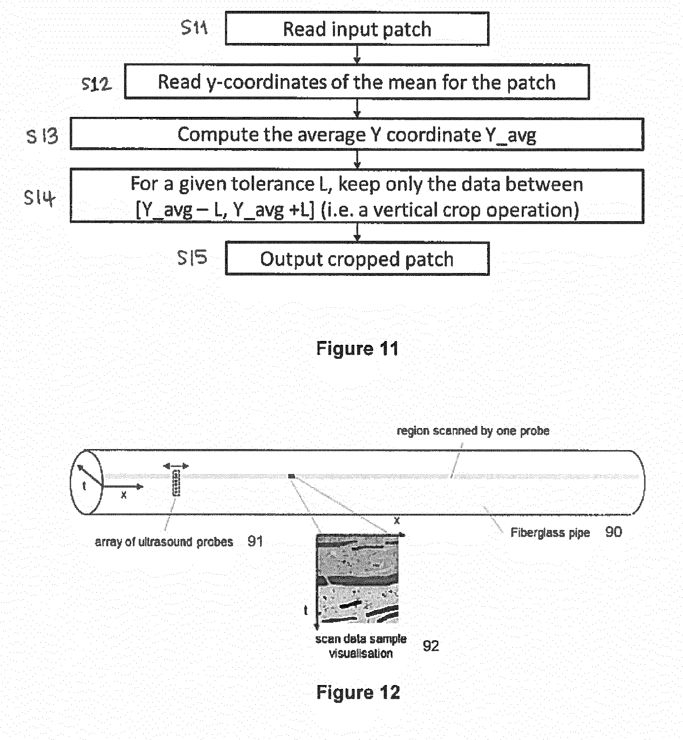

For each patch so generated, the clean-up operation may be performed following the process shown in the flowchart of Figure 11. In step S11, the input patch is read. The γ-coordinates of the mean for the patch are read in step S12, and then in step S13 the average γ-coordinate Y_avg is computed. A vertical crop operation is then carried out in step S14, i.e. for a given tolerance L only the data between Y_avg-L and Y_avg+L is kept. The cropped patch is output in step S15.

In other words, the quality of the data to be used in the detection methods (which may for example be Machine Learning methods) may be improved by only keeping within a vertical (i.e. in the depth direction) window from the local mean. This provides a general way of cleaning the data that is accurate, high-resolution and independent of the accuracy of the detection of the portion of interest.

A specific example will now be described with reference to Figures 12 to 14 in which an embodiment is applied to detect a portion of interest in image data derived from an item using ultrasonic NDT.

For example purposes, we consider a fiberglass pipe 90 as the test item, as shown in Figure 12. Fiberglass is widely used in manufacturing of large structures that benefit from being light weight, while having high strength and durability properties. Early applications of fiberglass came from the aviation and aerospace industries for aircraft design. Nowadays, there are many other applications including ship hulls, pipes, surfboards, wind turbine blades, automobile body parts, water slides, pole vaulting poles, among others. Any manufacturing anomalies in such objects may have a significant impact on their structural integrity.

Ultrasonic NDT scanning is performed by an array of probes 91, which emit sound waves that propagate inside the pipe structure 90 and receive the echoes resulting from interactions with its front and back walls (Figure 12). The amplitude of the echoes is measured along two dimensions, length x which is measured in a direction parallel to the length of the pipe 90, and time t. The resulting data may be represented as a numerical matrix with echo amplitudes, where each row i corresponds to a given propagation time tᵢ and each column j corresponds to a given horizontal position xⱼ. As mentioned above, the raw data matrix may be visualized (for example, by mapping a colour gradient to the amplitude values of the echoes (e.g. a gradient from deep blue to dark red), as shown in scan data sample visualisation 92.

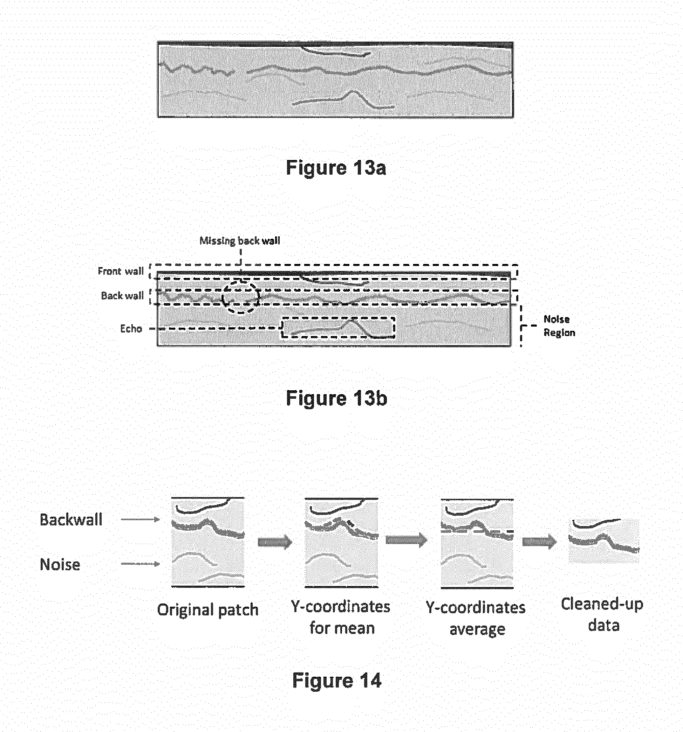

As shown in Figures 13a and 13b, the front and back structures of the test item are easily identifiable in the visualisation, since the amplitudes of the echoes they produce usually stand out as dark coloured regions, hence making it easy to inspect for defects. Defects such as wrinkles in the fibreglass layers bring about distinct visual patterns in the scan, such as discontinuities or curvatures in the back structure region.

The data visualized below the back wall structure constitutes noise and is thus irrelevant for the inspection process; therefore identification of the back wall is important. For this reason, the back wall is considered to be the 'layer of interest' to be detected automatically by the system, and to have its discontinuities, i.e. gaps, identified.

Application of an embodiment to the image data of Figure 13a is summarised in Figure 14 and explained below.

Given a training ultrasound scan P_{S} from a given probe P, forming part of the array of probes 91 in Figure 12, applied to another pipe which is similar (i.e. made of the same or very similar material and having the same or very similar size and structure) to the pipe 90 under consideration, an operator indicates the approximate (i.e. not necessarily precise) location of the back wall of the other pipe on the training scan as one colour against a backdrop of another, as described with reference to Figure 3b. For each x coordinate of the approximate location, the mean y coordinate is calculated, as described with reference to Figure 3c and illustrated in the centre left diagram of Figure 14.

This task is repeated for multiple training scans Pₛ from the same probe on similar pipes. The mean y for each x is then averaged over all P_{S} to produce Y_{P}, the set of estimates of the γ-coordinates of the back wall corresponding to each x. In other words, Y_{P} is the supervised estimate of the back wall location for probe P on a scan of the pipe under consideration (as shown in Figure 4c and the centre right diagram of Figure 14). The supervised estimate is then used to produce a supervised mask by specifying a bounding region R_{P} around the supervised estimate (as shown in Figure 4d). The bounds of this region are specified as some distance d above and below each y value in Y_{P}. In summary, R_{P} forms the supervised mask, an estimated region within which the back wall may be thought to lie for a scan made by probe P on the pipe under consideration.

For the specific P_{S} scan to be analyzed for discovery of the layer of interest, a Back Projection segmentation process is carried out, in series or in parallel with the supervised mask creation process, to identify candidate structures (segmentation) C_{PS} that may or may not form part of the back wall of the pipe under consideration (Figure 5b). However, some of the echoes, which are not part of the back wall, may still remain in the scan data.

The supervised mask R_{P} is then applied over the segmentation C_{PS} of scan P_{S} so that only elements of C_{PS} within the region R_{P} remain. This forms the masked segmentation M_{PS}, as shown in Figure 6c. In the example shown, while there are fewer structures remaining at this stage, still two non-back wall shapes remain visible in Figure 6c.

For each x value in M_{PS}, the mean y location is taken to produce U_{PS}, as shown in Figure 7a. A polynomial curve of best fit is then fit over all points U_{PS} to produce the final estimate of the 'segmented mean', the mean location L_{PS} of the back wall as it appears in scan P_{S}, as shown in Figure 7b.

As described earlier with reference to Figure 8, structures within the segmented scan M_{PS} which overlap with the segmented mean L_{PS} (or within some specified region above and/or below it) are taken to be the structures which form the back wall I_{PS}.

The location of the missing back wall segment is taken to be the x range within which no part of the back wall structure is present (as shown in Figures 9 and 13b).

As described above with respect to Figures 10 and 11, finally the image is cropped to remove unwanted data (see rightmost diagram of Figure 14), before a defect pattern selection process is carried out.

Embodiments are not limited to use with ultrasound scan images or non-destructive testing (NDT) image data, and may be applied to any matrix of data containing layer, wall, boundary or similar structures, regardless of whether that matrix is represented as an image. Furthermore, embodiments are not limited to use with fibreglass structures and may be applied to items or structures of any material or type.

For example, embodiments may be used in the field of geology, e.g. for automatically detecting strata which exhibit certain properties, and/or identifying discontinuities in those strata.

Embodiments may be applied to any image which has a dominant large object that needs to be detected. For example, a CCTV camera capturing footage from a motorway may include images from both the motorway lanes and the hard shoulder. In some applications, one may want to detect cars driving illegally on the hard shoulder. In another application, one may want to reduce the size of the image data file by eliminating irrelevant parts of the image, for example where cars are not present. An embodiment may be applied to segment the white line that separates the main road from the hard shoulder, regardless of any break in the line due to occlusions or wear in the paint.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

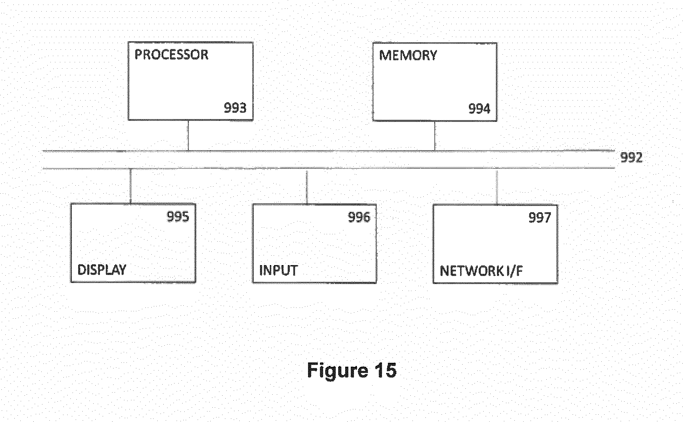

Figure 15 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 15 may be used to implement all the steps of the methods illustrated in Figures 1 and 11, and perform all the tasks of the apparatus 1 shown in Figure 2, or only to implement some of the steps in the method of Figure 1 and only to perform some of the tasks of the apparatus 1 shown in Figure 2.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 1 and 11 and defined in the claims. For example, such computer program code may implement at least one of: the coordinate receiver 10, bounding region specifier 20, candidate part identifier 30, mask applier 40 and estimator 50 depicted in Figure 2 and described earlier. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device. For example, the display unit 995 and/or the input mechanisms 996 may be configured to allow a human operator to enter approximate coordinates of the portion of interest in at least one training scan.

The network interface (network I/F) 997 may be connected to a network, such as the Internet, and is connectable to other such computing devices via the network. The network I/F 997 may control data input/output from/to other apparatus via the network.

Other peripheral devices such as microphone, speakers, printer, power supply unit, fan, case, scanner, trackerball, etc. may be included in the computing device.

Methods embodying the present invention may be carried out on a computing device such as that illustrated in Figure 15. Such a computing device need not have every component illustrated in Figure 15, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

## Claims

1. A computer-implemented method of locating a portion of interest in image or matrix data to be analyzed, which data are derived from an item under consideration, the method comprising:
obtaining approximate coordinates of a feature in training data, extending in an xy plane, which is deemed to correspond to the portion of interest, which training data have been acquired by a device which also acquired the data to be analyzed and relate to an item similar to the item under consideration,
wherein the training data comprises at least two separate pieces of data and obtaining the approximate coordinates includes calculating a mean y coordinate for each x coordinate of the said feature in each piece of training data and averaging the mean y coordinates for each x coordinate;
specifying a bounding region which extends around an area defined by the approximate coordinates of the feature;
identifying in the data to be analyzed at least one candidate part for a component of the portion of interest;
removing from the data to be analyzed any candidate parts having coordinates which fall outside the bounding region to obtain masked data; and
deriving an estimate for the location of the portion of interest in the data to be analyzed from the masked data by either:
(i) determining the mean y coordinate for each x coordinate of the masked data, fitting a polynomial curve of best fit to the mean coordinates, and identifying the candidate parts which fall within a region enclosing the polynomial curve of best fit as structures forming the portion of interest; or
(ii) fitting a polynomial curve of best fit to the masked data, and identifying the candidate parts which fall within a region enclosing the polynomial curve of best fit as structures forming the portion of interest.

2. A method as claimed in claim 1, wherein identifying at least one candidate part comprises applying a segmentation process to the data to be analyzed.

3. A method as claimed in claim 1 or 2, wherein obtaining approximate coordinates further comprises receiving coordinates of a feature in the training data which have been provided by a human operator.

4. A method as claimed in any preceding claim, wherein the portion of interest in the data to be analyzed is one of a layer, a wall or a boundary in the item under consideration.

5. A method as claimed in claim 4, wherein the data are derived from ultrasound scan data of the item under consideration.

6. A method as claimed in claim 4 or 5, wherein the item under consideration is at least one of: a manufactured item; and an item used in manufacture.

7. Use of a method as claimed in claim 4, 5 or 6 to detect a defect in the item under consideration for the purpose of determining at least one of: the structural integrity of material forming at least part of the item; and flaws in material forming at least part of the item.

8. Data processing apparatus (1) to locate a portion of interest in image or matrix data to be analyzed, which data are derived from an item under consideration, the apparatus (1) comprising:
a coordinate receiver (10) to receive approximate coordinates of a feature in training data, extending in an xy plane, which is deemed to correspond to the portion of interest, which training data have been acquired by a device which also acquired the data to be analyzed and relate to an item similar to the item under consideration,
wherein the training data comprises at least two separate pieces of data and obtaining the approximate coordinates includes calculating a mean y coordinate for each x coordinate of the said feature in each piece of training data and averaging the mean y coordinates for each x coordinate;
a bounding region specifier (20) to specify a bounding region which extends around an area defined by the approximate coordinates of the feature;
a candidate part identifier (30) to identify in the data to be analyzed at least one candidate part for a component of the portion of interest;
a mask applier (40) to obtain masked data by removing from the data to be analyzed any candidate parts having coordinates which fall outside the bounding region; and
an estimator (50) to derive from the masked data an estimate for the location of the portion of interest in the data to be analysed by either:
(i) determining the mean y coordinate for each x coordinate of the masked data, fitting a polynomial curve of best fit to the mean coordinates, and identifying the candidate parts which fall within a region enclosing the polynomial curve of best fit as structures forming the portion of interest; or
(ii) fitting a polynomial curve of best fit to the masked data, and identifying the candidate parts which fall within a region enclosing the polynomial curve of best fit as structures forming the portion of interest.

9. A computer program which, when run on a computer, causes that computer to carry out a method as claimed in any one of claims 1 to 7.

## Patentansprüche

1. Computer-implementiertes Verfahren zum Lokalisieren eines interessierenden Abschnitts in zu analysierenden Bild- oder Matrixdaten, wobei die Daten von einem betrachteten Gegenstand abgeleitet sind, wobei das Verfahren umfasst:
Erhalten von sich in einer xy-Ebene erstreckenden ungefähren Koordinaten eines Merkmals in Trainingsdaten, von dem angenommen wird, dass es dem interessierenden Abschnitt entspricht,
wobei die Trainingsdaten durch eine Vorrichtung erfasst wurden, die auch die zu analysierenden Daten erfasst hat, und sich auf einen dem betrachteten Gegenstand ähnlichen Gegenstand beziehen,
wobei die Trainingsdaten mindestens zwei getrennte Datenstücke umfassen und das Erhalten der ungefähren Koordinaten das Berechnen einer mittleren γ-Koordinate für jede x-Koordinate des Merkmals in jedem Trainingsdatenstück und das Mitteln der mittleren γ-Koordinaten für jede x-Koordinate enthält;
Spezifizieren einer Begrenzungsregion, die sich um einen Bereich erstreckt, der durch die ungefähren Koordinaten des Merkmals definiert wird;
Identifizieren, in den zu analysierenden Daten, mindestens einen in Frage kommenden Teil für eine Komponente des interessierenden Abschnitts;
Entfernen, aus den zu analysierenden Daten, aller in Frage kommenden Teile, die Koordinaten haben, die außerhalb der Begrenzungsregion liegen, um maskierte Daten zu erhalten; und
Ableiten einer Schätzung für die Position des interessierenden Abschnitts an den zu analysierenden Daten aus den maskierten Daten durch:
(i) Bestimmen der mittleren γ-Koordinate für jede x-Koordinate der maskierten Daten, Anpassen einer bestpassende Polynomkurve an die mittleren Koordinaten, und Identifizieren der in Frage kommenden Teile, die in eine Region fallen, die die bestpassende Polynomkurve umschließt, als Strukturen, die den interessierenden Abschnitt bilden; oder
(ii) Anpassen einer bestpassenden Polynomkurve an die maskierten Daten, und Identifizieren der in Frage kommenden Teile, die in eine Region fallen, die die bestpassende Polynomkurve umschließt, als Strukturen, die den interessierenden Abschnitt bilden.

2. Verfahren nach Anspruch 1, wobei das Identifizieren mindestens eines in Frage kommenden Teils das Anwenden eines Segmentierungsprozesses auf die zu analysierenden Daten umfasst.

3. Verfahren nach Anspruch 1 oder 2, wobei das Erhalten ungefährer Koordinaten des Weiteren das Empfangen von Koordinaten eines Merkmals in den Trainingsdaten umfasst, die durch eine Person bereitgestellt wurden.

4. Verfahren nach einem der vorangehenden Ansprüche, wobei der interessierende Abschnitt in den zu analysierenden Daten eines von einer Schicht, einer Wand und einer Grenze in dem betrachteten Gegenstand ist.

5. Verfahren nach Anspruch 4, wobei die Daten aus Ultraschall-Scandaten des betrachteten Gegenstandes abgeleitet werden.

6. Verfahren nach Anspruch 4 oder 5, wobei der betrachtete Gegenstand mindestens eines von Folgendem ist: ein Erzeugnis; und ein Gegenstand, der bei einer Herstellung verwendet wird.

7. Verwendung eines Verfahrens nach Anspruch 4, 5 oder 6, um einen Defekt in dem betrachteten Gegenstand zu detektieren, um mindestens eines von Folgendem zu bestimmen: die strukturelle Integrität des Materials, das mindestens einen Teil des Gegenstandes bildet; und Fehler in Material, das mindestens einen Teil des Gegenstandes bildet.

8. Datenverarbeitungsvorrichtung (1) zum Lokalisieren eines interessierenden Abschnitts in zu analysierenden Bild- oder Matrixdaten, wobei die Daten von einem betrachteten Gegenstand abgeleitet sind, wobei die Vorrichtung (1) umfasst:
einen Koordinatenempfänger (10) zum Empfangen von sich in einer xy-Ebene erstreckenden ungefähren Koordinaten eines Merkmals in Trainingsdaten, von dem angenommen wird, dass es dem interessierenden Abschnitt entspricht, wobei die Trainingsdaten durch eine Vorrichtung erfasst wurden, die auch die zu analysierenden Daten erfasst hat, und sich auf einen dem betrachteten Gegenstand ähnlichen Gegenstand beziehen,
wobei die Trainingsdaten mindestens zwei getrennte Datenstücke umfassen und das Erhalten der ungefähren Koordinaten das Berechnen einer mittleren γ-Koordinate für jede x-Koordinate des Merkmals in jedem Trainingsdatenstück und das Mitteln der mittleren y-Koordinaten für jede x-Koordinate enthält;
einen Begrenzungsregionsspezifizierer (20) zum Spezifizieren einer Begrenzungsregion, die sich um einen Bereich erstreckt, der durch die ungefähren Koordinaten des Merkmals definiert wird;
einen Kandidatenteilidentifizierer (30) zum Identifizieren, in den zu analysierenden Daten, mindestens eines in Frage kommenden Teils für eine Komponente des interessierenden Abschnitts;
einen Maskenanwender (40) zum Erhalten maskierter Daten durch Entfernen, aus den zu analysierenden Daten, aller in Frage kommenden Teile, die Koordinaten haben, die außerhalb der Begrenzungsregion liegen; und
einen Schätzer (50) zum Ableiten, aus den maskierten Daten, einer Schätzung für die Position des interessierenden Abschnitts in den zu analysierenden Daten durch:
(i) Bestimmen der mittleren γ-Koordinate für jede x-Koordinate der maskierten Daten, Anpassen einer bestpassende Polynomkurve an die mittleren Koordinaten, und Identifizieren der in Frage kommenden Teile, die in eine Region fallen, die die bestpassende Polynomkurve umschließt, als Strukturen, die den interessierenden Abschnitt bilden; oder
(ii) Anpassen einer bestpassenden Polynomkurve an die maskierten Daten, und Identifizieren der in Frage kommenden Teile, die in eine Region fallen, die die bestpassende Polynomkurve umschließt, als Strukturen, die den interessierenden Abschnitt bilden.

9. Computerprogramm, das, wenn es auf einem Computer ausgeführt wird, diesen Computer veranlasst, ein Verfahren nach einem der Ansprüche 1 bis 7 auszuführen.

## Revendications

1. Procédé mis en œuvre par ordinateur pour localiser une partie d'intérêt dans des données d'image ou de matrice à analyser, lesquelles données sont dérivées d'un article considéré, le procédé comprenant les étapes consistant à :
obtenir des coordonnées approximatives d'une caractéristique dans des données d'apprentissage, s'étendant dans un plan xy, qui est considérée correspondre à la partie d'intérêt, lesquelles données d'apprentissage ont été acquises par un dispositif qui a également acquis les données à analyser et se rapportent à un article similaire à l'article considéré,
dans lequel les données d'apprentissage comprennent au moins deux éléments de données séparés et l'obtention des coordonnées approximatives comprend le calcul d'une coordonnée y moyenne pour chaque coordonnée x de ladite caractéristique dans chaque élément de données d'apprentissage et un moyennage des coordonnées y moyennes pour chaque coordonnée x ;
spécifier une région de délimitation qui s'étend autour d'une zone définie par les coordonnées approximatives de l'entité ;
identifier dans les données à analyser au moins une partie candidate pour un composant de la partie d'intérêt ;
retirer des données à analyser toutes les parties candidates ayant des coordonnées qui tombent en dehors de la région de délimitation pour obtenir des données masquées ; et
dériver une estimation pour la localisation de la partie d'intérêt dans les données à analyser à partir des données masquées en :
(i) déterminant la coordonnée y moyenne pour chaque coordonnée x des données masquées, ajustant une courbe polynomiale de meilleur ajustement aux coordonnées moyennes, et identifiant les parties candidates qui tombent dans une région renfermant la courbe polynomiale de meilleur ajustement en tant que structures formant la partie d'intérêt ; ou
(ii) ajustant une courbe polynomiale de meilleur ajustement aux données masquées, et identifiant les parties candidates qui tombent dans une région renfermant la courbe polynomiale de meilleur ajustement en tant que structures formant la partie d'intérêt.

2. Procédé selon la revendication 1, dans lequel l'identification d'au moins une partie candidate comprend l'application d'un processus de segmentation aux données à analyser.

3. Procédé selon la revendication 1 ou 2, dans lequel l'obtention de coordonnées approximatives comprend en outre la réception des coordonnées d'une caractéristique dans les données d'apprentissage qui ont été fournies par un opérateur humain.

4. Procédé selon l'une quelconque des revendications précédentes, dans lequel la partie d'intérêt dans les données à analyser est l'une d'une couche, d'une paroi ou d'une limite dans l'article considéré.

5. Procédé selon la revendication 4, dans lequel les données sont dérivées de données de balayage ultrasonore de l'article considéré.

6. Procédé selon la revendication 4 ou 5, dans lequel l'article considéré est au moins un parmi : un article manufacturé ; et un article utilisé en fabrication.

7. Utilisation d'un procédé selon la revendication 4, 5 ou 6 pour détecter un défaut dans l'article considéré dans le but de déterminer au moins un parmi : l'intégrité structurelle d'un matériau formant au moins une partie de l'article ; et des défauts dans un matériau formant au moins une partie de l'article.

8. Appareil de traitement de données (1) pour localiser une partie d'intérêt dans les données d'image ou de matrice à analyser, lesquelles données sont dérivées d'un article considéré, l'appareil (1) comprenant :
un récepteur de coordonnées (10) pour recevoir des coordonnées approximatives d'une caractéristique dans les données d'apprentissage, s'étendant dans un plan xy, qui est censée correspondre à la partie d'intérêt, lesquelles données d'apprentissage ont été acquises par un dispositif qui a également acquis les données à analyser et se rapportant à un article similaire à l'article considéré,
dans lequel les données d'apprentissage comprennent au moins deux éléments de données séparés et l'obtention des coordonnées approximatives comprend le calcul d'une coordonnée y moyenne pour chaque coordonnée x de ladite caractéristique dans chaque élément de données d'apprentissage, et un moyennage des coordonnées y moyennes pour chaque coordonnée x ;
un spécificateur de région de délimitation (20) pour spécifier une région de délimitation qui s'étend autour d'une zone définie par les coordonnées approximatives de la caractéristique ;
un identifiant de partie candidate (30) pour identifier dans les données à analyser au moins une partie candidate pour un composant de la partie d'intérêt ;
un dispositif d'application de masque (40) pour obtenir des données masquées en retirant des données à analyser toutes les parties candidates ayant des coordonnées qui tombent en dehors de la région de délimitation ; et
un estimateur (50) pour dériver des données masquées une estimation pour la localisation de la partie d'intérêt dans les données à analyser en :
i) déterminant la coordonnée y moyenne pour chaque coordonnée x des données masquées, ajustant une courbe polynomiale de meilleur ajustement aux coordonnées moyennes, et identifiant les parties candidates qui tombent dans une région renfermant la courbe polynomiale de meilleur ajustement en tant que structures formant la partie d'intérêt ; ou
(ii) ajustant une courbe polynomiale de meilleur ajustement aux données masquées, et identifiant les parties candidates qui tombent dans une région renfermant la courbe polynomiale de meilleur ajustement en tant que structures formant la partie d'intérêt.

9. Programme informatique qui, lorsqu'il est exécuté sur un ordinateur, amène cet ordinateur à exécuter un procédé selon l'une quelconque des revendications 1 à 7.
